# EUROPÄISCHE PATENTSCHRIFT

(11) **EP 1 390 646 B1**
(45) Veröffentlichungstag und Bekanntmachung des Hinweises auf die Patenterteilung: **05.01.2005**
(21) Anmeldenummer: 02774020.8
(22) Anmeldetag: 18.05.2002
(51) Int. Cl.: F16H 59/02, F16H 61/00

(54) **SCHALTVORRICHTUNG FÜR EIN AUTOMATGETRIEBE EINES FAHRZEUGES**
SHIFT DEVICE FOR AN AUTOMATIC TRANSMISSION OF A VEHICLE
DISPOSITIF DE CHANGEMENT DE VITESSE POUR TRANSMISSION AUTOMATIQUE DANS UN VEHICULE

(30) Priorität: 25.05.2001 DE 10125700
(43) Veröffentlichungstag der Anmeldung: 25.02.2004
(73) Patentinhaber: ZF FRIEDRICHSHAFEN AG, 88038 Friedrichshafen (DE)
(72) Erfinder: HENNEKEN, Markus, 88079 Kressbronn (DE); JAUCH, Friedemann, 88069 Tettnang (DE); SCHULER, Franz-Josef, 88079 Kressbronn (DE); MAUZ, Thomas, 88085 Langenargen (DE); KIEFER, Michael, 88069 Tettnang (DE)
(86) Internationale Anmeldenummer: PCT/EP2002/005507
(87) Internationale Veröffentlichungsnummer: WO 2002/097307

(56) Entgegenhaltungen:
- EP-A- 0 911 207
- DE-A- 3 807 881
- DE-A- 19 709 506
- DE-A- 19 731 842
- DE-A- 19 951 374
- US-A- 4 648 290

## Beschreibung

Die Erfindung betrifft eine Schaltvorrichtung für ein Automatgetriebe eines Fahrzeuges, insbesondere eines Kraftwagens, nach der im Oberbegriff des Patentanspruches 1 näher definierten Art.

Aus der Praxis sind Schaltvorrichtungen bekannt, bei denen ein Fahrer über einen Wählhebel einen Automatikfahrmodus und einen Manuellfahrmodus auswählen kann, wobei hierfür ein Wählhebel in einer Schaltgasse mit mehreren Sensoren vorgesehen ist. Den Sensoren ist üblicherweise jeweils eine Schaltposition eines dynamischen Schaltprogramms zugeordnet. So kann beispielsweise mit dem Wählhebel mechanisch eine Schaltposition P für Parken, R für Rückwärtsfahrt, N für Neutral (Leerlauf) und D für Vorwärtsfahrt (Drive) angewählt werden, bei denen ein automatisches Schalten zwischen der kleinsten Gangstufe und der größten vorhandenen Gangstufe in Abhängigkeit von der Stellgeschwindigkeit des Gaspedals, der Motordrehzahl, der Fahrzeugbeschleunigung und weiterer wichtiger, in einem elektronischen Steuergerät zur Verfügung stehender Größen vorgenommen wird.

Weiter sind aus der Praxis Schaltvorrichtungen bekannt, die Schaltpositionen für eine maximal hochschaltbare Gangstufe aufweisen. So kann z. B. mit einer Schaltposition "4" ein fünfter Gang gesperrt werden, wenn es unter bestimmten Fahrbedingungen zu häufigem Gangwechsel zwischen dem vierten und dem fünften Gang kommt, während z. B. mit einer Schaltposition "2" ein Hochschalten in einen höheren Gang, wie beispielsweise bei einem Befahren von Paßstraßen mit längeren Steigungen oder Gefällstrecken, verhindert wird. Des weiteren kann natürlich auch eine Schaltposition für den ersten Gang vorgesehen sein. Die Ausgestaltung einer Schaltvorrichtung mit derartigen Schaltpositionen für verschiedene Schaltbereiche führt zu einer besseren Nutzung der Motorleistung unter Mitbenutzung der Motorbremswirkung und hilft ein unnötiges Hoch- und Runterschalten zu vermeiden.

Weiter weisen aus der Praxis bekannte Schaltvorrichtungen häufig eine weitere Schalteinrichtung zur sogenannten "Tipp-Schaltung" auf, die einem Fahrer die Möglichkeit eines vereinfachten manuellen Betriebs beispielsweise zur Realisierung einer sportlicheren Fahrweise gibt. Dabei erfolgt eine Schaltung in eine nächsttiefere oder nächsthöhere Gangstufe durch Antippen eines entsprechenden Sensors über den Wählhebel oder einen separaten Schalter oder Taster, der an einem Lenkrad angeordnet sein kann.

Eine gattungsgemäße Schaltvorrichtung ist aus der DE 38 07 881 C2 bekannt, bei der ein "Manuell-Programm" der Tippschaltung mittels einer zur Schaltgasse des dynamischen Schaltprogramms parallelen zweiten Schaltgasse realisiert ist. Zur Aktivierung des Manuell-Programms wird ein Wählhebel über eine Quergasse in eine zweite Schaltgasse geführt, in der er in nicht betätigter Stellung in neutraler Mittellage gehalten ist. Zur Auslösung von Hochschaltungen und Rückschaltungen im Getriebe wird dieser jeweils manuell verschwenkt, wobei die Schaltbewegungen des Wählhebels durch Sensoren erfaßt werden, deren Signale in das Steuergerät des Automatgetriebes eingehen.

Die DE 197 09 506 A1 beschreibt ebenfalls ein Schaltsteuersystem zur Verwendung in einem Automatikgetriebe, mit welchem ein Übersetzungsverhältnis des Automatikgetriebes über eine automatische oder eine manuelle Vorgabe veränderbar ist. Eine automatische Schaltsteuerung erfolgt dabei, wenn sich das Kraftfahrzeug in einem Betriebsbereich befindet, in dem eine manuelle Vorgabe zur Änderung des Übersetzungsverhältnisses, insbesondere um einen Überlastschutz des Automatikgetriebes zu gewährleisten, unterdrückt ist. Die Akzeptanz des manuellen Hochschalt- bzw. Herunterschalt-Steuerbefehls ist hier solange unterdrückt, bis eine vorbestimmte Zeit nach dem Auftreten der automatischen Schaltung verstrichen ist.

Bei allen beschriebenen Lösungen mit einer manuellen Tipp-Schaltung welche zusätzlich zu einem dynamischen Schaltprogramm vorgesehen ist, wird durch Antippen eines Plus-Sensors in den nächsthöheren Gang manuell hochgeschaltet oder durch Antippen eines Minus-Sensors manuell in den nächstniedrigeren Gang runtergeschaltet. Diese für den Fahrer sehr eingeschränkte Wählmöglichkeit führt insbesondere zu einer Beeinträchtigung des Bedienkomforts, wenn der Fahrer beispielsweise für eine extrem starke Beschleunigung ein Rückschalten um mehrere Gangstufen oder eine starke Hochschaltung wünscht. In einem solchen Fall muß er mehrmals in Folge den Minus-Sensor bzw. den Plus-Sensor antippen und die entsprechende Schaltung abwarten, um die insgesamt gewünschte Übersetzungsänderung zu erhalten.

Um ein Rückschalten oder Hochschalten um mehrere Gangstufen im Manuell-Programm bedienungsmäßig zu vereinfachen, könnte zwar vorgesehen werden, daß eine Schaltposition für die Wähleinrichtung zur Einfachschaltung und eine weitere Schaltposition für eine Maximal-Schaltung sowohl für eine Hochschaltung wie auch für eine Rückschaltung bereitgestellt wird, jedoch birgt die Anordnung weiterer Schaltpositionen, sei es in Form von Wählhebelstellungen oder Tasterstufen, stets eine erhöhte Gefahr von Fehlbedienungen.

Es ist Aufgabe der vorliegenden Erfindung, eine Schaltvorrichtung für ein durch ein elektronisches Steuergerät gesteuertes Fahrzeugautomatgetriebe, insbesondere eines Kraftwagens, zu schaffen, bei dem neben einem automatischen Schaltmodus dem Fahrer ein manueller Schaltmodus zur Verfügung steht, bei dem unter Wahrung eines größtmöglichen Bedienkomforts dem Fahrerwunsch innerhalb zulässiger Grenzen weitgehender entsprochen wird.

Erfindungsgemäß wird diese Aufgabe mit einer Schaltvorrichtung nach den Merkmalen des Patentanspruches 1 gelöst.

Mit der erfindungsgemäßen Schaltvorrichtung, bei der ein Impulszähler vorgesehen ist, mittels dem aufeinanderfolgende Impulse einer manuellen Vorgabe funktional miteinander verknüpfbar sind, wobei ein Schaltsignal in Abhängigkeit der Verknüpfung generierbar ist, kann dem Fahrerwunsch auch nach mehrfachen Rückschaltungen oder Hochschaltungen entsprochen werden, wenn dies innerhalb zulässiger Betriebsgrenzen liegt. Ebenso kann mit der erfindungsgemäßen Schaltvorrichtung eine Korrektur einer unmittelbar zuvor durch einen Tipp-Impuls geäußerten manuellen Vorgabe berücksichtigt werden.

Damit zeichnet sich die erfindungsgemäße Schaltvorrichtung darin aus, daß sie dem Fahrer einen weitaus größeren Spielraum für manuelle Vorgaben bietet als dies bei herkömmlichen Tipp-Schaltungen der Fall ist.

Dabei ist in der erfindungsgemäßen Schaltvorrichtung vorgesehen, daß bei der Verknüpfung Impulse zur Hochschaltung oder Rückschaltung summiert und anschließend abgearbeitet werden, wobei ein Zählerwert des Impulszählers bei einem Impuls zur Hochschaltung inkrementiert und bei einem Impuls zur Rückschaltung dekrementiert wird.

Um dem Fahrer die Möglichkeit für Mehrfachschaltungen über eine manuelle Vorgabe z. B. mittels Tipp-Impulsen zu geben, ist es vorteilhaft, wenn nach Registrierung eines Impulses eine applizierbare Sperrzeit gestartet wird, innerhalb der weitere summierbare Impulse registrierbar sind.

In einer vorteilhaften Ausgestaltung der erfindungsgemäßen Schaltvorrichtung kann des weiteren vorgesehen sein, daß ein Schaltsignal zur Mehrfachhochschaltung bei Stillstand des Fahrzeuges ausgebbar ist. Auf diese Weise wird dem Fahrer auch bei manuellem Schaltmodus ein Anfahren in einem höheren Gang z. B. auf glatter Fahrbahn ermöglicht.

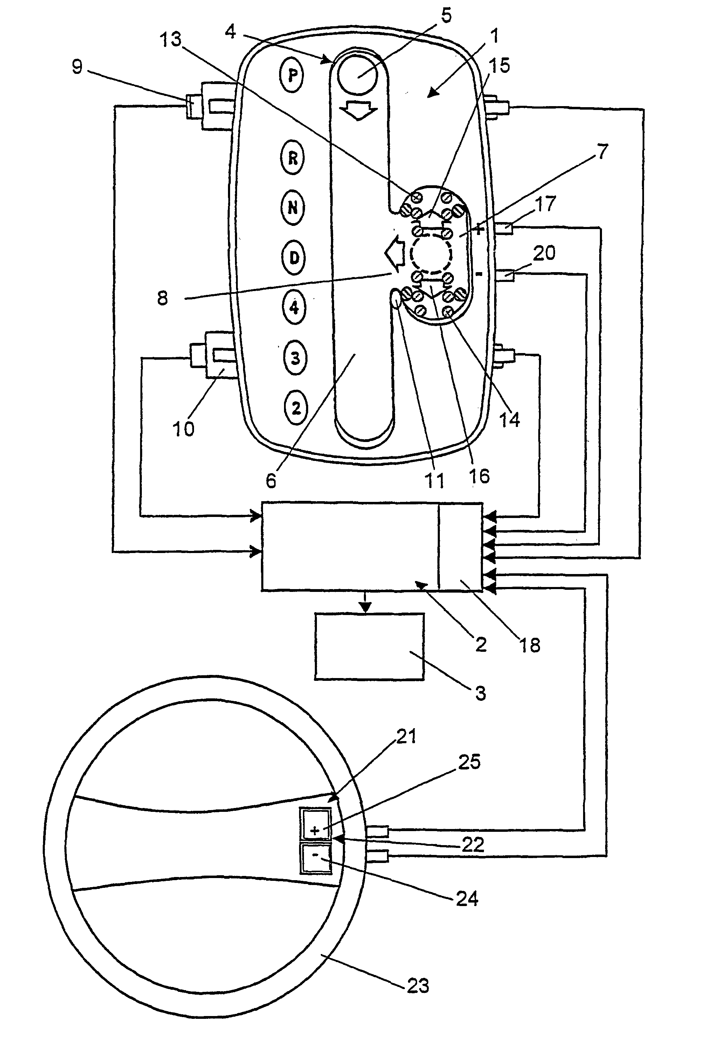

Weitere Vorteile und vorteilhafte Ausgestaltungen der Schaltvorrichtung nach der Erfindung ergeben sich aus den weiteren Patentansprüchen, der nachfolgenden Beschreibung und der Zeichnung.

Ein Ausführungsbeispiel des erfindungsgemäßen Schaltvorrichtung wird anhand der Zeichnung in der nachfolgenden Beschreibung näher erläutert.

Die einzige Figur der Zeichnung zeigt eine schematische Darstellung einer Schaltvorrichtung für ein durch ein elektronisches Steuergerät mit einem Impulszähler gesteuertes Fahrzeugautomatgetriebe, welches wahlweise in einem automatischen Schaltmodus oder in einem manuellen Schaltmodus durch Betätigung eines Wählhebels oder eines an einem Multifunktionslenkrad vorgesehenen Tipp-Tasters betreibbar ist.

Bezug nehmend auf die Figur ist eine Schaltvorrichtung 1 für ein durch ein elektronisches Steuergerät 2 gesteuertes Automatgetriebe 3 eines Kraftfahrzeuges ersichtlich, wobei letztere nur symbolisch angedeutet sind. Die Schaltvorrichtung 1, welche hier für einen Personenkraftwagen vorgesehen ist, weist eine erste Schalteinrichtung 4 für eine dynamisches Schaltprogramm auf, in der mittels Anwahl einer Schaltposition P zum Parkieren des Fahrzeugs, einer Schaltposition R zur Rückwärtsfahrt, einer Schaltposition N für den Leerlauf und einer Schaltposition D für Automatik-Vorwärtsfahrt nach Vorgabe einer adaptiven Getriebesteuerung verschiedene automatisch zu schaltende Getriebegänge vorwählbar sind. Hierzu ist ein als Wähleinrichtung fungierender Wählhebel 5 vorgesehen, welcher in einer ersten Schaltgasse 6, in der Sensoren für die vorbeschriebenen Schaltpositionen angeordnet sind, verschiebbar ist. Neben den bereits erwähnten Schaltpositionen P, R, N und D sind in dieser ersten Schaltgasse 6 noch weitere Schaltpositionen "4" für eine vierte Gangstufe, "3" für eine dritte Gangstufe und "2" für eine zweite Gangstufe vorgesehen, in denen das Schalten jeweils zwischen dem ersten Gang und dieser bezeichneten Gangstufe automatisch durchgeführt wird.

Zusätzlich zu der ersten Schaltgasse 6 für einen automatischen Schaltmodus ist zur Ausführung eines manuellen Schaltmodus eine parallel zur ersten Schaltgasse 6 angeordnete zweite Schaltgasse 7 vorgesehen, in die der Wählhebel 5 über eine Quergasse 8 umlegbar ist. Ein Umschalten des Wählhebels 5, dessen Position in der ersten Schaltgasse 6 sensorisch erfaßt und über Signalübertragungseinrichtungen 9, 10 als Signale an das elektronische Steuergerät 2 ausgegeben wird, wird durch einen in der Quergasse 8 angeordneten Sensor 11 erfaßt.

Befindet sich der Wählhebel 5 in der zweiten Schaltgasse 7, wird er von Federn 13, 14 in einer in der Figur strichliert gezeigten neutralen Mittellage gehalten. Von dieser Mittellage aus kann der Wählhebel 5 durch manuelle Betätigung in eine erste mit einem Pfeil 15 gezeichnete Richtung zur Auslösung von Hochschaltungen und in eine mit einem Pfeil 16 angedeutete zweite Richtung zur Auslösung von Rückschaltungen bewegt werden. Die konstruktive Ausgestaltung des Wählhebels bezüglich seiner Verschwehkbarkeit in der Kulisse der Schaltvorrichtung 1 entspricht dabei herkömmlicher Bauart.

Wenn der Wählhebel 5 in Richtung 15 zur Hochschaltung schoben wird, erreicht dieser eine Schaltposition "+" in der ein Plussensor 17 anspricht und ein entsprechendes Signal an einen in der Figur nur symbolisch angedeuteten Impulszähler 18 des elektronischen Steuergerätes 2 ausgibt. Falls der Fahrer den Wählhebel 5 derart antippt, daß er sich von der Mittellage in Bewegungsrichtung 16 in der zweiten Schaltgasse 7 bewegt, so erreicht dieser eine Schaltposition "-" zur Rückschaltung, wobei ein Minussensor 20 ein entsprechendes Signal an den Impulszähler 18 des elektronischen Steuergerätes 2 ausgibt.

Neben der Schaltkulisse der ersten Schalteinrichtung 4 weist die Schaltvorrichtung 1 vorliegend zusätzlich eine zweite Schalteinrichtung 21 auf, bei der als Wähleinrichtung ein Tipp-Taster 22 an einem Multifunktionslenkrad 23 vorgesehen ist. In der in der Figur äußerst schematisiert dargestellten Ausführung weist der Tipp-Taster 22 eine erste Taste 24 für Rückschaltungen und eine zweite Taste 25 für Hochschaltungen auf, wobei der Fahrer durch Antippen des Tipp-Tasters 22 in Hochschaltrichtung oder Rückschaltrichtung ebenfalls eine manuelle Vorgabe an das elektronische Steuergerät 2 tätigen kann.

Sowohl bei Betätigung des Wählhebels 5 als auch bei Betätigung des Tipp-Tasters 22 werden die aufeinanderfolgenden Impulse einer manuellen Vorgabe mittels des Impulszählers 18 funktional miteinander verknüpft, wobei ein Schaltsignal in Abhängigkeit der Verknüpfung generiert wird.

Bei der Verknüpfung werden Impulse zur Hochschaltung "+" oder Rückschaltung "-" summiert und anschließend abgearbeitet, wobei ein Zählerwert des Impulszählers 18 bei einem Impuls zur Hochschaltung vorliegend um einen Wert "+1" inkrementiert und bei einer Rückschaltung entsprechend dekrementiert wird, d. h. daß der Wert "1" subtrahiert wird. Der Zähler des Tipp-Impulszählers 18 wird solange abgearbeitet, bis er auf "0" steht. Solange der Zähler einen Wert größer "0" hat, wird eine Hochschaltung angefordert, und wenn der Zähler kleiner "0" ist, wird eine Rückschaltung angefordert.

Um Mehrfachschaltungen wie z. B. Doppelrückschaltungen über Tipp-Impulse zu ermöglichen, wird nach Registrierung eines Impulses eine applizierbare Sperrzeit gestartet, innerhalb der weitere summierbare Impulse registrierbar sind. Wird nach Ablauf dieser bestimmten Sperrzeit z. B. ein Zählerwert kleiner "-2" ermittelt, so führt dies zur Anforderung einer Doppelrückschaltung oder Maximalrückschaltung.

Über die Speicherung von Impulsen ist somit ein Schaltsignal für Mehrfachrückschaltungen oder Mehrfachhochschaltungen generierbar, wobei jedoch ein Schaltsignal für eine Schaltung niedrigerer Ordnung ausgegeben wird, wenn eine angeforderte Schaltung höherer Ordnung als unzulässig erkannt wird. Ist beispielsweise eine angeforderte Doppelrückschaltung aufgrund zu hoher Abtriebsdrehzahlen nicht möglich, wird sie in eine einfache Rückschaltung umgewandelt und angefordert.

Des weiteren ist bei der Verknüpfung der durch Antippen der Plus-Position oder Minus-Position des Wählhebels 5 oder des Tipp-Tasters 22 an den Impulszähler 18 des elektronischen Steuergerätes 2 ausgegebenen Impulse vorliegend vorgesehen, daß bei einem Impuls zur Schaltung in eine Richtung, dem wenigstens ein Impuls zur Schaltung in die entgegengesetzte Richtung vorangegangen ist, ein Schaltsignal entsprechend dem letzten Impuls ausgegeben wird und der wenigstens eine vorangegangene Impuls gelöscht wird. Alternativ hierzu kann auch vorgesehen sein, daß die Ausgabe eines Schaltsignals in einem solchem Fall unterbleibt.

Diese Funktion ist für den Fall vorgesehen, daß ein Fahrer mehrere Tipp-Impulse in eine Schaltrichtung abgibt und sofort darauf einen Tipp-Impuls in die entgegengesetzte Richtung vornimmt. Dann werden alle vorigen, nicht geschalteten Tipp-Impulse gelöscht, da davon auszugehen ist, daß ein hektisch agierender Fahrer schnell eine andere Gangübersetzung herbeiführen möchte und daher mehrmals tippt, dabei feststellend, daß die gewünschte Übersetzung überschritten wird, weshalb ein Tipp-Impuls in die entgegengesetzte Schaltrichtung vorgegeben wird. Wenn eine Hochschaltung angefordert wird und der Zähler des Tipp-Impulszählers 18 im Negativbereich steht, wird der Zähler auf "1" oder "0" gesetzt. Analoges gilt für den Fall einer angeforderten Rückschaltung, wenn der Zähler im Positivbereich steht, wobei er hier auf "-1" oder "0" gesetzt wird.

In einer weiteren Ausführung kann vorgesehen sein, daß nach einem Tipp-Impuls eine Verzögerungszeit gestartet wird, wobei während dieser Verzögerungszeit keine weiteren Tipp-Impulse registriert werden, d. h. daß z. B. während der Getriebeschaltung keine Tipp-Impulse angenommen werden. Des weiteren kann in weiteren Ausführungen auch vorgesehen sein, daß bei Auftreten mehrerer Tipp-Impulse innerhalb einer zusätzlichen Sperrzeit ein Hardwarefehler, wie z. B. Störspannungen oder Rückkopplüngen, bei der Tippbetätigung angenommen wird. In einem solchen Fall kann vorgesehen werden, daß der manuelle Betrieb verlassen werden kann, auch wenn sich der Wählhebel in der manuellen Schaltgasse 7 befindet.

Bei der hier vorgestellten bevorzugten Ausführung ist vorgesehen, daß ein Schaltsignal für eine Mehrfachhochschaltung auch bei Stillstand des Fahrzeuges ausgebbar ist. Das heißt, es ist auch bei Stillstand des Fahrzeuges möglich, in den zweiten oder dritten Gang zu tippen sowie auch wieder zurückzutippen, um gegebenenfalls so ein Anfahren in einem höheren Gang z. B. auf glatter Fahrbahn zu ermöglichen. Eine Bedingung dabei ist, daß eine maximale Lastpedalstellung kleiner als ein maximaler, vorgegebener Schwellwert ist. Ist diese Bedingung nicht erfüllt, wird die höhere Gangwahl ignoriert und in einem niedrigeren Gang angefahren, um z. B. einen Getriebeschutz sicherzustellen.

Auch wenn der Fahrer im zweiten oder dritten Gang angefahren ist, wird bei der vorliegenden Ausführung der Schaltvorrichtung 1 stets eine Rückschaltung bis in die niedrigste Übersetzungsstufe, d. h. bis in den ersten Gang zugelassen, wenn das Fahrzeug aus höherer Geschwindigkeit oberhalb eine vordefinierten höheren Geschwindigkeitsgrenze angehalten wird oder die Fahrzeuggeschwindigkeit bis auf eine dem ersten Gang zugeordnete Geschwindigkeit reduziert wird.

Falls nach einem Anfahren im zweiten oder dritten Gang sofort beziehungsweise innerhalb eines kurzen vorgegebenen Zeitfensters wieder angehalten wird und somit ein Fahrzeugstillstand erkannt wird, bevor eine applizierbare Geschwindigkeitsgrenze und eine vorgegebene maximale Lastpedalstellung erreicht wird, wird die Anforderung, aus einem Fahrzeugstillstand in einer höheren Übersetzungsstufe anzufahren, in dem elektronischen Steuergerät 2 gespeichert.

Wird jedoch beim Anfahren aus einer höheren Übersetzungsstufe die applizierbare Geschwindigkeitsgrenze oder die maximale Lastpedalstellung überschritten, oder liegt ein Impuls der manuellen Vorgabe vor, da der Fahrer beispielsweise einen anderen Gang antippt, so wird die Anforderung nach einer höheren Übersetzungsstufe für den Fall eines wiederholten Anfahrens aus dem Stillstand des Fahrzeuges gelöscht.

Des weiteren ist bei der vorliegenden Schaltvorrichtung 1 vorgesehen, daß aufgrund eines in dem elektronischen Steuergerät 2 abgelegten Tipp-Schaltprogramms bei Erreichen vorgegebener Betriebszustände des Fahrzeuges eine Schaltung automatisch ausgelöst wird, wobei während einer solchen Schaltung ein Impuls der manuellen Vorgabe ignoriert wird oder nur ein erster Impuls der manuellen Vorgabe gespeichert wird. Die automatische Schaltung wird damit als vom Fahrer gewünscht interpretiert, und die zusätzliche Schaltanforderung durch einen Tipp-Impuls des Fahrers kann ignoriert werden. Dies gilt sowohl für die Kombination einer automatischen Hochschaltung und einer manuellen Vorgabe einer Hochschaltung als auch für eine automatische Rückschaltung und eine manuell angeforderte Rückschaltung. Andere Kombinationen sind aufgrund der Überschreitung der Drehzahlbegrenzungslinien nicht erlaubt. Um eine nachfolgende Tipp-Schaltung durch manuelle Vorgabe eines Impulses zu akzeptieren, müssen eine oder mehrere der folgendenden Ereignisse der automatischen Schaltung eintreten: So muß die Synchrondrehzahl erreicht sein, der Zustand der abschaltenden Kupplung einen bestimmten Wert erreicht haben, der Zustand der zuschaltenden Kupplung einen bestimmten Wert erreicht haben, ein Motoreingriff beendet sein, die Differenzdrehzahl zum alten Gang einen maximalen Wert erreicht haben, die Differenzdrehzahl zum neuen Gang einen minimalen Wert erreicht haben, und der Zustand "Schaltung beendet" erreicht sein.

Weiterhin ist für den Fall, daß bei einem sich in Abhängigkeit der Verknüpfung ergebenen Schaltsignal, welches für den vorliegenden Betriebszustand als unzulässig erkannt wird, vorgesehen, daß die zu dem Verknüpfungsergebnis führenden Impulse der manuellen Vorgabe für eine vorgegebene Zeit gespeichert werden. Wenn der Fahrer beispielsweise durch Tippen eine Rückschaltung anfordert, und die Rückschaltung z. B aufgrund des Überschreitens eines Drehzahlbegrenzungswertes nicht ausgeführt werden kann, so wird der Tipp-Impuls für eine vorgegebene Zeit gespeichert, wenn der Fahrer die Bremse betätigt und das Fahrpedal nicht betätigt. Damit wird erreicht, daß bei Verzögerung die Motorbremskraft optimal genutzt wird, d. h. bei maximal zulässigen Drehzahlen zurückgeschaltet wird.

Wenngleich mit der vorliegenden Schaltvorrichtung dem Fahrer ein größtmöglicher Spielraum für den manuellen Schaltmodus gegeben werden soll, so ist zum Schutz des Getriebes und des Motors vorgesehen, daß der manuelle Schaltmodus verlassen wird, wenn z. B. eine unzulässig hohe Temperatur des Fahrzeuggetriebes und/oder des Motors festgestellt wird, wobei dann Schaltkennlinien des automatischen Schaltmodus gewählt werden, die zur Senkung der betreffenden Temperaturen führen.

Es versteht sich, daß die Erfindung nicht an die oben beschriebene konstruktive Ausführung der Schaltvorrichtung gebunden ist, sondern auch auf beliebig anders konstruktiv ausgeführte Wähleinrichtungen zur Realisierung eines manuellen Schaltmodus und eines automatischen Schaltmodus anwendbar ist. Dabei ist festzuhalten, daß unter dem Begriff "tippen" auch eine Impulsvorgabe durch Betätigen eines Wippschalters oder Drehschalters zu verstehen ist.

Die erfindungsgemäße Vorrichtung eignet sich insbesondere für Kraftwagen mit einem elektronisch gesteuerten Fahrzeugautomatgetriebe, welches sowohl ein Stufenautomatgetriebe als ein CVT-Automatgetriebe sein kann. Es sind jedoch auch Anwendungen in anderen Fahrzeugen, wie z. B. bei Krafträdern oder Wasserfahrzeugen mit elektronisch gesteuerten Fahrzeugautomatgetrieben denkbar, da auch hier ein Betrieb wahlweise in automatischem Schaltmodus oder manuellem Schaltmodus möglich ist, und dem Fahrerwunsch im manuellen Schaltmodus auch hier weitestgehend entsprochen werden soll.

### Bezugszeichen

- 1: Schaltvorrichtung
- 2: elektronisches Steuergerät
- 3: Automatgetriebe
- 4: erste Schalteinrichtung
- 5: Wähleinrichtung, Wählhebel
- 6: erste Schaltgasse
- 7: zweite Schaltgasse, Manuellgasse
- 8: Quergasse
- 9: Signalübertragungseinrichtung
- 10: Signalübertragungseinrichtung
- 11: Sensor
- 13: Feder
- 14: Feder
- 15: Schaltbewegungsrichtung der Wähleinrichtung zur Hochschaltung
- 16: Schaltbewegungsrichtung der Wähleinrichtung zur Rückschaltung
- 17: Plussensor
- 18: Impulszähler
- 20: Minussensor
- 21: zweite Schalteinrichtung
- 22: Wähleinrichtung, Tipp-Taster
- 23: Multifunktionslenkrad
- 24: erste Taste
- 25: zweite Taste

## Patentansprüche

1. Schaltvorrichtung für ein Automatgetriebe eines Fahrzeuges, insbesondere eines Kraftwagens, bei der eine Anforderung zum Ändern einer aktuellen Übersetzung des Automatgetriebes (3) bei Erreichen vorgegebener Betriebszustände des Fahrzeuges automatisch oder auf manuelle Vorgabe in einem manuellen Schaltmodus generierbar ist, wobei ein Impulszähler (18) vorgesehen ist, mittels dem aufeinanderfolgende Impulse einer manuellen Vorgabe. funktional miteinander verknüpfbar sind, indem Impulse zur Hochschaltung (+) oder Rückschaltung (-) summiert und anschließend abgearbeitet werden, und ein Schaltsignal in Abhängigkeit dieser Verknüpfung generierbar ist **dadurch gekennzeichnet, daß** ein Zählerwert des Impulszählers (18) bei einem Impuls zur Hochschaltung (+) inkrementiert und bei einem Impuls zur Rückschaltung (-) dekrementiert wird.

2. Schaltvorrichtung nach Anspruch 1, **dadurch gekennzeichnet, dass** nach Registrierung eines Impulses eine applizierbare Sperrzeit gestartet wird, innerhalb der weitere summierbare Impulse registrierbar sind.

3. Schaltvorrichtung nach Anspruch 1 oder 2, **dadurch gekennzeichnet, dass** ein Schaltsignal für Mehrfachrückschaltungen oder Mehrfachhochschaltungen in Abhängigkeit der Verknüpfung generierbar ist.

4. Schaltvorrichtung nach Anspruch 3, **dadurch gekennzeichnet, dass** ein Schaltsignal für eine Schaltung niedrigerer Ordnung ausgegeben wird, wenn eine angeforderte Schaltung höherer Ordnung als unzulässig erkannt wird.

5. Schaltvorrichtung nach einem der Ansprüche 1 bis 4, **dadurch gekennzeichnet, dass** ein Schaltsignal für eine Mehrfachhochschaltung bei Stillstand des Fahrzeuges ausgebbar ist.

6. Schaltvorrichtung nach Anspruch 5, **dadurch gekennzeichnet, dass** das Schaltsignal zur Mehrfachhochschaltung bei Stillstand des Fahrzeuges ausgebbar ist, wenn eine Lastpedalstellung kleiner als ein maximaler Schwellwert ist.

7. Schaltvorrichtung nach Anspruch 6, **dadurch gekennzeichnet, dass** ein Schaltsignal für eine Schaltung in eine niedrigere Übersetzungsstufe als angefordert ausgegeben wird, wenn die Lastpedalstellung größer als der maximale Schwellwert ist.

8. Schaltvorrichtung nach einem der Ansprüche 1 bis 7, **dadurch gekennzeichnet, dass** eine Rückschaltung bis in eine niedrigste Übersetzungsstufe zugelas sen wird, wenn die Fahrzeuggeschwindigkeit von einem Wert oberhalb einer vordefinierten höheren Geschwindigkeitsgrenze bis zu einem der niedrigsten Übersetzungsstufe zugeordneten Wert reduziert wird.

9. Schaltvorrichtung nach einem der Ansprüche 5 bis 8, **dadurch gekennzeichnet, dass** eine Anforderung, aus einem Fahrzeugstillstand in einer höheren Übersetzungsstufe anzufahren, gespeichert wird, wenn nach einem Anfahren in einer höheren Übersetzungsstufe innerhalb eines vorgegebenen Zeitfensters ein Fahrzeugstillstand erkannt wird, bevor eine applizierbare Geschwindigkeitsgrenze und eine vorgegebene maximale Lastpedalstellung erreicht wird.

10. Schaltvorrichtung nach Anspruch 9, **dadurch gekennzeichnet, dass** die Anforderung nach einer höheren Übersetzungsstufe für den Fall eines wiederholten Anfahrens aus dem Stillstand des Fahrzeuges gelöscht wird, wenn die applizierbare Geschwindigkeitsgrenze oder die maximale Lastpedalstellung überschritten wird oder ein Impuls der manuellen Vorgabe vorliegt.

11. Schaltvorrichtung nach einem der Ansprüche 1 bis 10, **dadurch gekennzeichnet, dass** bei einem Impuls zur Schaltung in eine Richtung, dem wenigstens ein Impuls zur Schaltung in die entgegengesetzte Richtung vorangegangen ist, ein Schaltsignal entsprechend dem letzten Impuls ausgegeben wird und der wenigstens eine vorangegangene Impuls gelöscht wird.

12. Schaltvorrichtung nach einem der Ansprüche 1 bis 10, **dadurch gekennzeichnet, dass** bei einem Impuls zur Schaltung in eine Richtung, dem wenigstens ein Impuls zur Schaltung in die entgegengesetzte Richtung vorangegangen ist, die Ausgabe eines Schaltsignales unterbleibt, und der wenigstens eine vorangegangene Impuls gelöscht wird.

13. Schaltvorrichtung nach einem der Ansprüche 1 bis 12, **dadurch gekennzeichnet, dass** während einer Schaltung, welche automatisch aufgrund des Erreichens vorgegebener Betriebszustände des Fahrzeuges ausgelöst wurde, ein Impuls der manuellen Vorgabe ignoriert wird oder nur ein erster Impuls der manuellen Vorgabe gespeichert wird.

14. Schaltvorrichtung nach einem der Ansprüche 1 bis 13, **dadurch gekennzeichnet, dass** bei einem sich in Abhängigkeit aus der Verknüpfung ergebenden Schaltsignal, welches für den vorliegenden Betriebszustand als unzulässig erkannt wird, die zu dem Verknüpfungsergebnis führenden Impulse der manuellen Vorgabe für eine vorgegebene Zeit gespeichert werden.

## Claims

1. The invention relates to a shifting device for an automatic transmission of a vehicle, especially a motor vehicle, which in a manual shifting mode allows a request to change a current ratio of the automatic transmission (3) to be generated automatically or by manual input as soon as specified vehicle-operating conditions are active; a pulse counter (18) is provided by means of which successive pulses of a manual input can be functionally linked to each other by pulses for upshifting (+) or downshifting (-) being summed up and subsequently processed, and a shifting signal depending on the logic can be generated , **characterized in that** a pulse for upshifting (+) results in the value of the pulse counter (18) being incremented while a pulse for downshifting (-) results in this value being decremented.

2. Shifting device according to claim 1, **characterized in that** after registration of a pulse, an off-period is initiated within which further summable pulses can be registered.

3. Shifting device according to claim 1 or 2, **characterized in that** a shifting signal for multiple downshifts or multiple upshifts can be generated depending on the logic.

4. Shifting device according to claim 3, **characterized in that** a shifting signal for a shift of a lower order is issued if a requested shift of a higher order is recognized as not permissible.

5. Shifting device according to one of the claims from 1 through 4, **characterized in that** during standstill of the vehicle, a shifting signal for multiple upshifts can be issued.

6. Shifting device according to claim 5, **characterized in that** the shifting signal for multiple upshifts can be issued if a loaded-pedal position does not reach a maximum threshold value.

7. Shifting device according to claim 6, **characterized in that** a shifting signal for a shift to a lower ratio is issued as requested if the loaded-pedal position exceeds the maximum threshold value.

8. Shifting device according to one of the claims from 1 through 7, **characterized in that** downshifting to the lowest ratio is permitted if the speed of the vehicle is reduced from a value above a predefined higher speed limit to a value assigned to the lowest ratio.

9. Shifting device according to one of the claims from 5 through 8, **characterized in that** a request to start from standstill in a higher ratio is saved if after driveaway in a higher ratio vehicle standstill is recognized within a specified time slot and before a speed limit and a specified maximum loaded-pedal position is reached.

10. Shifting device according to claim 9, **characterized in that** in the case of repeated driveaway from standstill, the request for a higher ratio is cancelled if the speed limit or the maximum loaded-pedal position is exceeded or a pulse from manual input is issued.

11. Shifting device according to one of the claims from 1 through 10, **characterized in that** in case of a pulse for a shift in one direction, this pulse was preceded by at least one pulse for a shift in the opposite direction and that a shifting signal according to the latest pulse is issued and that at least the preceding pulse is cancelled.

12. Shifting device according to one of the claims from 1 through 10, **characterized in that** in case of a pulse for a shift in one direction, this pulse was preceded by at least one pulse for a shift in the opposite direction and that no shifting signal is issued and at least the preceding pulse is cancelled.

13. Shifting device according to one of the claims from 1 through 12, **characterized in that** during a shift, which was automatically triggered on account of specified operating conditions of the vehicle being reached, a pulse from manual input is ignored or only the first pulse from manual input is saved.

14. Shifting device according to one of the claims from 1 through 13, **characterized in that** in case of a logic-generated shifting signal that is recognized as not permissible for the present operating condition, the pulses from the manual input resulting in the logic instruction are saved for a specified period.

## Revendications

1. Dispositif d'enclenchement pour une transmission automatique d'un véhicule, plus particulièrement d'un véhicule automobile, dans lequel une demande de modification d'un rapport transmission actuel de la transmission automatique (3) peut être effectuée automatiquement lorsque le véhicule atteint des états de fonctionnement prédéterminés ou par une action manuelle dans un mode d'enclenchement manuel, un compteur d'impulsions (18) étant prévu, à l'aide duquel des impulsions successives d'un actionnement manuel sont combinées entre elles de manière fonctionnelle, du fait que les impulsions pour l'enclenchement d'une vitesse supérieure (+) ou une rétrogradation (-) sont additionnées puis traitées et un signal d'enclenchement pouvant être généré en fonction de cette combinaison, **caractérisé en ce qu'**une valeur de comptage du compteur d'impulsion (18) est incrémentée d'une impulsion pour le passage à une vitesse supérieure (+) et décrémentée d'une impulsion pour la rétrogradation (-).

2. Dispositif d'enclenchement selon la revendication 1, **caractérisé en ce que,** après l'enregistrement d'une impulsion, un temps de blocage applicable est démarré, pendant lequel d'autres impulsions additionnables peuvent être enregistrées.

3. Dispositif d'enclenchement selon la revendication 1 ou 2, **caractérisé en ce qu'**un signal d'enclenchement pour des enclenchements multiples de vitesses supérieures ou des rétrogradations multiples peut être généré en fonction de la combinaison.

4. Dispositif d'enclenchement selon la revendication 3, **caractérisé en ce qu**'un signal d'enclenchement pour un enclenchement d'ordre plus faible est généré lorsqu'un enclenchement demandé d'un ordre plus élevé est reconnu comme inadmissible.

5. Dispositif d'enclenchement selon l'une des revendications 1 à 4, **caractérisé en ce qu'**un signal d'enclenchement pour un enclenchement multiple de vitesse supérieure peut être généré lors de l'arrêt du véhicule.

6. Dispositif d'enclenchement selon la revendication 5, **caractérisé en ce qu**'un signal d'enclenchement pour un enclenchement multiple de vitesse supérieure peut être généré lors de l'arrêt du véhicule lorsqu'une position de la pédale de charge est inférieure à une valeur seuil maximale.

7. Dispositif d'enclenchement selon la revendication 6, **caractérisé en ce qu'**un signal d'enclenchement pour un enclenchement vers un rapport de transmission plus faible est considéré comme étant demandé lorsque la position de la pédale de charge est supérieure à la valeur seuil maximale.

8. Dispositif d'enclenchement selon l'une des revendications 1 à 7, **caractérisé en ce qu'**une rétrogradation vers le rapport de transmission le plus faible est autorisée lorsque la vitesse du véhicule est réduite d'une valeur supérieure à une limite de vitesse plus élevée et prédéterminée jusqu'à une valeur correspondant au rapport de transmission le plus faible.

9. Dispositif d'enclenchement selon l'une des revendications 5 à 8, **caractérisé en ce qu'**une demande de passer de l'arrêt du véhicule vers un rapport de transmission plus élevé est mémorisée lorsque, après un passage à un rapport de transmission plus élevé à l'intérieur d'une fenêtre de temps prédéterminée, un arrêt du véhicule est détecté, avant qu'une limite de vitesse applicable et une position maximale prédéterminée de pédale de charge ne soient atteintes.

10. Dispositif d'enclenchement selon la revendication 9, **caractérisé en ce que** la demande de passer à un rapport de transmission plus élevé, pour le cas d'un nouveau démarrage à partir de l'arrêt du véhicule, est effacée lorsque la limite de vitesse applicable ou la position maximale de la pédale de charge est dépassée ou qu'une impulsion d'actionnement manuel apparaît.

11. Dispositif d'enclenchement selon l'une des revendications 1 à 10, **caractérisé en ce que**, lors d'une impulsion pour l'enclenchement dans un sens, précédée d'au moins une impulsion pour l'enclenchement dans la direction opposée, un signal d'enclenchement correspondant à la dernière impulsion est généré et l'impulsion précédente est effacée.

12. Dispositif d'enclenchement selon l'une des revendications 1 à 10, **caractérisé en ce que**, lors d'une impulsion pour l'enclenchement dans un sens, précédée d'au moins une impulsion pour l'enclenchement dans la direction opposée, la production d'un signal d'enclenchement n'est pas effectuée et l'impulsion précédente est effacée.

13. Dispositif d'enclenchement selon l'une des revendications 1 à 12, **caractérisé en ce que**, pendant un enclenchement, qui a été déclenché automatiquement du fait de l'obtention d'un état de fonctionnement prédéterminé du véhicule, une impulsion d'actionnement manuel est ignorée ou seule une première impulsion d'actionnement manuel est mémorisée.

14. Dispositif d'enclenchement selon l'une des revendications 1 à 13, **caractérisé en ce que**, lors d'un signal produit par la combinaison et reconnu comme inadmissible pour l'état de fonctionnement actuel, les impulsions de l'actionnement manuel qui produisent le résultat de la combinaison sont mémorisées pendant un temps prédéterminé.
